# EUROPÄISCHE PATENTSCHRIFT

(11) **EP 2 951 755 B1**
(45) Veröffentlichungstag und Bekanntmachung des Hinweises auf die Patenterteilung: **31.07.2019**
(21) Anmeldenummer: 13783287.9
(22) Anmeldetag: 18.10.2013
(51) Int. Cl.: G06K 7/10, G06K 13/14

(54) **DOKUMENTENPUFFER**
DOCUMENT BUFFER
TAMPON DE DOCUMENTS

(30) Priorität: 31.01.2013 DE 102013100981
(43) Veröffentlichungstag der Anmeldung: 09.12.2015
(73) Patentinhaber: Bundesdruckerei GmbH, 10969 Berlin (DE)
(72) Erfinder: RACKL, Christian, 80686 München (DE); RUISINGER, Herbert, 86554 Pöttmes (DE); VONRUETY, Mario, 10247 Berlin (DE)
(74) Vertreter: Patentship Patentanwaltsgesellschaft mbH
(86) Internationale Anmeldenummer: PCT/EP2013/071886
(87) Internationale Veröffentlichungsnummer: WO 2014/117879

(56) Entgegenhaltungen:
- DE-A1-102005 048 872
- DE-A1-102006 016 450
- DE-B3-102005 054 300
- US-A1- 2012 249 305

## Beschreibung

Die vorliegende Erfindung betrifft einen Dokumentenpuffer zum Zugreifen auf elektronisch auslesbare Identifikationsdokumente.

Moderne Identifikationsdokumente sind mit kontaktlos lesbaren Schaltkreisen, z.B. RFID-Chips, ausgestattet, welche zur elektronischen Personalisierung sowie zur Prüfung der Echtheit eingesetzt werden.

Zur Herstellung von derartigen Identifikationsdokumenten ist es daher notwendig, auf deren Schaltkreise zuzugreifen. Hierzu können sogenannte Dokumentenpuffer eingesetzt werden, welche in der Fachsprache als Personalisierungs- und Verifikationstürme, bezeichnet sind. Die Dokumentenpuffer sind üblicherweise durch senkrecht angeordnete Dokumenthalterungen gebildet und sind senkrecht verfahrbar. In den Dokumentenhalterungen sind jeweils übereinander Schreib-Lese-Geräte angeordnet, welche drahtlos auf die RFID-Chips der Identifikationsdokumente zugreifen. Der Zugriff auf in einem Dokumentenpuffer gelagerten Identifikationsdokumente kann, wie in der Druckschrift DE 10 2005 054 300 ausgeführt ist, parallel erfolgen.

Die Bestückung eines turmartigen Dokumentenpuffers mit Identifikationsdokumenten ist jedoch langsam, aufwändig und komplex, weil die Identifikationsdokumente einem derartigen Dokumentenpuffer sequenziell zugeführt werden müssen. Außerdem beanspruchen turmartige Dokumentenpuffer einen großen Bauraum.

Die Offenlegungsschrift DE 10 2006 016 450 A1 zeigt ein Lesegerät zum Auslesen von Transpondern.

Die Offenlegungsschrift DE 10 2005 048 872 A1 zeigt einen Testkopf mit einer Antennenträgerplatte.

Die Offenlegungsschrift US 2012/249305 A1 zeigt eine Schreib/Lesevorrichtung zum Schreiben/Lesen von Daten in respektive aus RFID-Tags.

Es ist daher die der Erfindung zugrundeliegende Aufgabe, ein effizientes Konzept zum Zugreifen auf ein Identitätsdokument zu schaffen.

Diese Aufgabe wird durch die Merkmale der unabhängigen Ansprüche gelöst. Vorteilhafte Weiterbildungsformen sind Gegenstand der Beschreibung, der Zeichnungen sowie der abhängigen Ansprüche.

Die Erfindung basiert auf der Erkenntnis, dass die obige Aufgabe durch benachbart und beispielsweise in einer Ebene angeordnete Aufnahmefächer, welche einen Dokumentenpuffer zur Aufnahme von einer Mehrzahl von Identifikationsdokumenten bilden, gelöst werden kann. Die Aufnahmefächer sind beispielsweise gegenseitig elektromagnetisch abgeschirmt, sodass darin angeordnete RFID-Stationen (RFID: Radio Frequency Identifikation) zur Kommunikation mit RFID-Chips der Identifikationsdokumente sich gegenseitig nicht stören. Die Aufnahmefächer sind beispielsweise oberseitig offen und dadurch einfach zugänglich, sodass sie beispielsweise mittels eines Roboterarms beispielsweise eines "Pick and Place"-Arms, mit Identifikationsdokumenten einfach bestückt werden können.

Gemäß einem Aspekt betrifft die Erfindung einen Dokumentenpuffer zum Zugreifen auf drahtlos, d.h. kontaktlos, lesbare Schaltkreise von elektronisch auslesbaren Identifikationsdokumenten, mit einer Mehrzahl von benachbarten Aufnahmefächern, wobei jedes Aufnahmefach für die Aufnahme von einem Identifikationsdokument vorgesehen ist, und wobei zwischen benachbarten Aufnahmefächern eine leitfähige Abschirmwandung zur elektromagnetischen Abschirmung angeordnet ist, wobei die Aufnahmefächer jeweils durch Wannen mit den leitfähigen Abschirmwandungen gebildet sind und wobei die Aufnahmefächer jeweils eine Dokumentenhalterung zum Auflegen eines Identifikationsdokuments umfassen, um ein jeweiliges Identifikationsdokument in einem jeweiligen Aufnahmefach aufzunehmen, und einer Mehrzahl von drahtlosen Schreib-Lese-Einrichtungen zur drahtlosen Kommunikation mit jeweils einem drahtlos lesbaren Schaltkreis eines Identifikationsdokumentes, wobei jeweils eine drahtlose Schreib-Lese-Einrichtung in jeweils einem Aufnahmefach angeordnet ist.

Zur elektromagnetischen Abschirmung können beispielsweise leitfähige Materialien oder Ferritmaterialien oder Ferritfolien herangezogen werden.

Ein Identifikationsdokument ist beispielsweise ein Ausweisdokument, ein Reisepass, ein Zahlungsmittel, beispielsweise eine Bankkarte oder eine Kreditkarte, ein Führerschein, ein Unternehmensausweis, ein Frachtbrief oder ein Berechtigungsausweis. Im Allgemeinen kann ein Identifikationsdokument auch jedes andere Dokument sein, dessen Identität und Echtheit bestätigt werden soll und/oder das elektronisch auslesbare Daten umfasst.

Das Identifikationsdokument kann ferner ein Hybrid-Identifikationsdokument, beispielsweise eine Hybrid-Chipkarte, sein, das auch kontaktbehaftet personalisiert und ausgelesen werden kann. Hierzu kann das Identifikationsdokument neben einem kontaktlos auslesbaren Schaltkreis für einen kontaktlosen Zugriff, beispielsweise einem RFID-Chip, auch eine kontaktbehaftete Schnittstelle, insbesondere einen Anschluss, zum kontaktbehafteten Zugriff umfassen.

Gemäß einer Ausführungsform sind die Aufnahmefächer daher auch mit kontaktbehafteten Schnittstellen für einen kontaktbehafteten Zugriff auf das Identifikationsdokument versehen.

Das Trägermaterial des Identifikationsdokumentes kann ein- oder mehrlagig bzw. papier- und/oder kunststoffbasiert sein. Das Trägermaterial kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Gemäß einer Ausführungsform sind die drahtlosen Schreib-Lese-Einrichtungen für die Kommunikation mittels elektromagnetischer Wellen eingerichtet. Hierzu umfassen die Schreib-Lese-Einrichtungen beispielsweise jeweils eine Sende-Empfangsantenne sowie einen mit der Sende-Empfangsantenne gekoppelten Sende-Empfangsschaltkreis.

Gemäß einer Ausführungsform sind die drahtlosen Schaltkreise RFID-Schaltkreise, wobei die drahtlosen Schreib-Lese-Einrichtungen RFID-Schreib-Lese-Einrichtungen zur Kommunikation mit den RFID-Schaltkreisen sind.

Gemäß einer Ausführungsform sind die Aufnahmefächer in Form einer Matrix-Struktur angeordnet. Dadurch entstehen zumindest zwei nebeneinander angeordnete Reihen von Aufnahmefächern, was eine automatisierte Bestückung der Aufnahmefächer mit Identifikationsdokumenten ermöglicht.

Gemäß einer Ausführungsform sind die leitfähigen Abschirmwandungen aus Metall oder aus einem leitfähigen Kunststoff, insbesondere aus einem leitfähigen Polymer, oder aus Ferritmaterialien oder aus Ferritfolien geformt.

Die jeweilige Dokumentenhalterung kann beispielsweise durch seitliche Vorsprünge gebildet sein. Die Dokumentenhalterungen können eine beispielsweise seitlich umlaufende Einlegemulde bilden, in welche ein Identifikationsdokument einlegbar ist. Die jeweilige Dokumentenhalterung kann einen Boden, beispielsweise aus Kunststoff, umfassen, oder bodenlos sein.

Gemäß einer Ausführungsform ist jeweils unterhalb einer Dokumentenhalterung eine drahtlose Schreib-Lese-Einrichtung angeordnet. Die jeweilige Schreib-Lese-Einrichtung kann beispielsweise am oder im Boden des jeweiligen Aufnahmefachs angeordnet sein. Dadurch wird erreicht, dass die Schreib-Lese-Einrichtungen in unmittelbarer Nähe der Identifikationsdokumente angeordnet sind, wodurch die Sendeleistung der jeweiligen Schreib-Lese-Einrichtung weiter reduziert werden kann.

Gemäß einer Ausführungsform umfasst der Dokumentenpuffer eine gemeinsame Kommunikationsschnittstelle zur Kommunikation mit der Mehrzahl von drahtlosen Schreib-Lese-Einrichtungen, wobei jeder drahtlosen Schreib-Lese-Einrichtung eine Kommunikationsadresse zugeordnet ist. Die Kommunikationsschnittstelle ist beispielweise eine Bus-Schnittstelle, sodass die Schreib-Lese-Einrichtungen über einen gemeinsamen Kommunikationsbus ansteuerbar sein können. Dazu kann jede Schreib-Lese-Einrichtung oder jedes Aufnahmefach eine eigene Kommunikationsadresse aufweisen.

Der Dokumentenpuffer kann alternativ oder zusätzlich eine Mehrzahl von Kommunikationsschnittstellen, beispielsweise USB-Schnittstellen, zur Kommunikation mit der Mehrzahl von drahtlosen Schreib-Lese-Einrichtungen umfassen, wobei jeder drahtlosen Schreib-Lese-Einrichtung eine Kommunikationsschnittstelle zugeordnet ist. Hierbei kann jedes Aufnahmefach eine Kommunikationsschnittstelle und/oder eine eigene Kommunikationsadresse aufweisen.

Gemäß einer Ausführungsform ist die jeweilige Kommunikationsschnittstelle eine der folgenden Kommunikationsschnittstellen: USB, SATA, RS232, RS 485, I²C, Profibus, AS, ASi, Interbus, FlexRay, LIN-Bus, FAIS, IrDa, MODBUS, CAN, Feldbus, Thunderbolt.

Gemäß einer Ausführungsform ist die Mehrzahl von drahtlosen Schreib-Lese-Einrichtungen beispielsweise gleichzeitig adressierbar. Gemäß einer Implementierungsform kann jede Schreib-Lese-Einrichtung mit einer Kommunikationsadresse versehen sein, sodass die Schreib-Lese-Einrichtungen über einen einzigen Kommunikationsbus ansprechbar sein können. Die Aufnahmefächer können hierzu Kommunikationsschnittstellen zur Anbindung an einen Kommunikationsbus aufweisen, wobei die Schreib-Lese-Einrichtungen mit den Kommunikationsschnittstellen verbindbar sind. Gemäß einer anderen Implementierungsform können die Schreib-Lese-Einrichtungen jeweils einzeln angesteuert werden, beispielsweise über eine USB-Schnittstelle.

Gemäß einer Ausführungsform ist die Mehrzahl von drahtlosen Schreib-Lese-Einrichtungen ausgebildet, gleichzeitig auf die drahtlos lesbaren Schaltkreise zuzugreifen. Auf diese Weise wird eine Beschleunigung der Zugriffsprozesse erreicht.

Jede in einem Aufnahmefach angeordnete drahtlose Schreib-Lese-Einrichtung kann ausgebildet sein, eine Sendeleistung zu erzeugen, welche in einem jeweils benachbarten Aufnahmefach einen vorbestimmten Schwellwert nicht überschreitet, oder alle drahtlosen Schreib-Lese-Einrichtung können ausgebildet sein, Sendeleistungen derart zu erzeugen, sodass eine in einem Aufnahmefach messbare Gesamt-Sendeleistung, welche eine kumulierte Sendeleistung einer Mehrzahl von Schreib-Lese-Einrichtung ist, einen vorbestimmten Schwellwert nicht überschreitet. Dies kann durch eine Reduktion der Sendeleistung der jeweiligen Schreib-Lese-Einrichtung erreicht werden.

Der vorbestimmte Schwellwert kann geringer als 50% der maximalen Sendeleistung einer Schreib-Lese-Einrichtung sein. Der Schwellwert kann beispielsweise 5%, 10%, 20%, 30% oder 40% der maximalen Sendeleistung einer Schreib-Lese-Einrichtung betragen.

Die jeweilige Sendeleistung kann voreingestellt oder adaptiv einstellbar sein. Zur Adaption können die Schreib-Lese-Einrichtungen die Signalstärke von anderen Schreib-Lese-Einrichtungen messen und eine Aufforderung zur Reduktion der Sendeleistung an andere Schreib-Lese-Einrichtungen aussenden, welche ansprechend hierauf die Sendeleistung reduzieren können.

Gemäß einer Ausführungsform grenzen benachbarte Aufnahmefächer unmittelbar aneinander. Dadurch wird der Raumbedarf noch weiter reduziert. Hierbei können benachbarte Aufnahmefächer durch gemeinsame Abschirmwandungen, welche Trennwände bilden können, voneinander abgegrenzt sein. Die Abschirmwandungen dämpfen zumindest teilweise oder reduzieren die Ausbreitung ausgesendeter elektromagnetischer Wellen in benachbarte Fächer hinein.

Gemäß einer Ausführungsform sind die Schreib-Lese-Einrichtungen elektronische Schreib-Lesegeräte oder optische Lesegeräte, insbesondere optische Lesegeräte zur Bildaufnahme oder eine Sensorik im sichtbaren Lichtbereich, im UV-Lichtbereich oder im Infrarot-Lichtbereich, oder eine mechanische oder induktive oder elektronische Sensorik im Bereich physikalischer Messtechnik.

Gemäß einer Ausführungsform umfasst der Dokumentenpuffer zumindest eine Zugriffseinrichtung zum Zugreifen auf zumindest ein Identifikationsdokument, wobei die Zugriffseinrichtung ein elektronisches Schreib-Lesegerät oder ein optisches Lesegerät, insbesondere ein optisches Lesegerät zur Bildaufnahme oder eine Sensorik im sichtbaren Lichtbereich, im UV-Lichtbereich oder im Infrarot-Lichtbereich, oder eine mechanische oder induktive oder elektronische Sensorik im Bereich physikalischer Messtechnik ist.

Weitere Ausführungsbeispiele werden Bezug nehmend auf die beiliegenden Figuren erläutert. Es zeigen:
- Fig. 1: ein Aufnahmefach eines Dokumentenpuffers; und
- Fig. 2: einen Dokumentenpuffer.

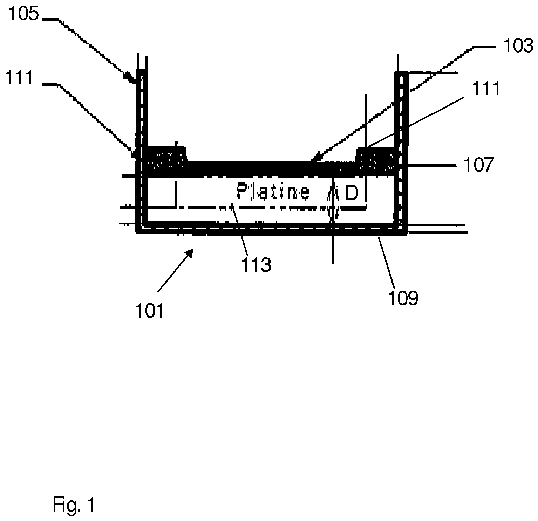

Fig. 1 zeigt eine Querschnittsansicht eines Aufnahmefaches 101 eines Dokumentenpuffers zum Zugreifen auf ein elektronisch auslesbares Identifikationsdokument 103 gemäß einer Ausführungsform.

Das Aufnahmefach 101 ist für die Aufnahme von einem Identifikationsdokument 103 vorgesehen und umfasst Abschirmwandungen 105, 107, welche seitliche Wände des Aufnahmefachs 101 formen. Die Abschirmwandungen 105, 107 sind elektrisch leitfähig, beispielweise metallisch, wodurch eine zumindest teilweise elektromagnetische Abschirmwirkung erzielt wird. Das Aufnahmefach kann ferner stirnseitige Wandungen umfassen, welche winklig an die Abschirmwandungen 105, 107 angrenzen und ebenfalls leitfähig sein können.

Das Aufnahmefach 101 umfasst ferner einen Bodenbereich 109, welcher die Abschirmwandungen 105, 107 verbindet. Der Bodenbereich 109 ist gemäß einer Ausführungsform ebenfalls elektrisch leitfähig. In diesem Fall kann das Aufnahmefach 101 durch eine Wanne aus Metall oder aus einem leitfähigen Kunststoff, beispielsweise leitfähigen Polymer, gebildet sein.

Gemäß einer Ausführungsform ist der Bodenbereich 109 elektrisch nicht leitend.

Das Aufnahmefach 101 umfasst ferner eine Dokumentenhalterung 111, auf welche das Identifikationsdokument 103 auflegbar ist. Die Dokumentenhalterung 111 kann durch seitliche Vorsprünge gebildet sein. Die Dokumentenhalterung 111 kann ferner eine Einmuldung aufweisen, in welche das Identifikationsdokument einlegbar ist. Die Einmuldung kann beispielsweise durch waagerechte Ausnehmungen in den seitlichen Vorsprüngen gebildet sein.

Das Aufnahmefach 101 umfasst ferner eine Schreib-Lese-Einrichtung 113, welche beispielsweise eine RFID-Station sein kann und ausgebildet ist, mit einem kontaktlos auslesbaren Schaltkreis, beispielsweise RFID-Chip, kontaktlos, d.h. drahtlos mittels elektromagnetischer Wellen in an sich bekannter Weise zu kommunizieren. Die Schreib-Lese-Einrichtung 113 kann beispielsweise in einem Zwischenraum der Dicke D zwischen der Dokumentenhalterung 111 und dem Bodenbereich 109 angeordnet sein.

Das Aufnahmefach 101 umfasst gemäß einer Ausführungsform einen Kommunikationsanschluss, welcher in Fig. 1 nicht dargestellt ist und zur Ansteuerung bzw. zur externen Kommunikation mit der Schreib-Lese-Einrichtung 113, beispielsweise mittels eines nicht dargestellten Computers, vorgesehen ist.

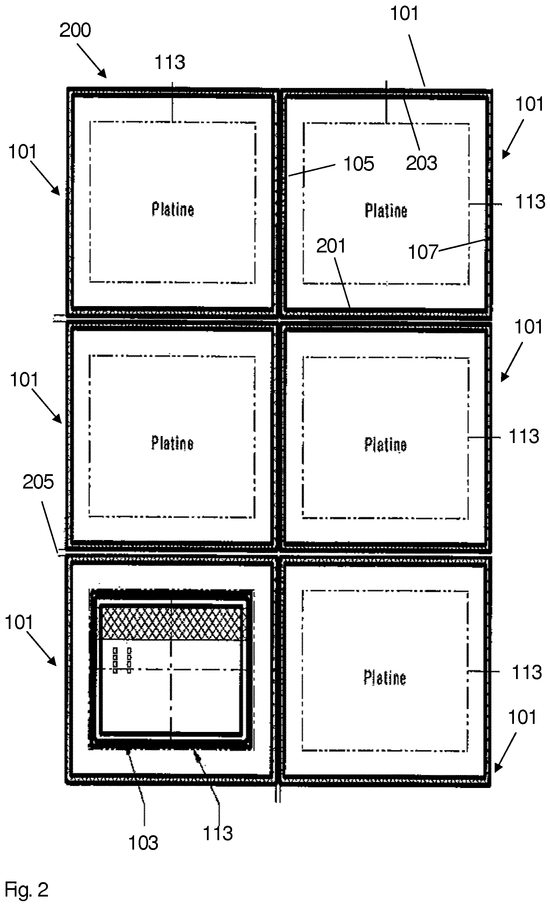

Fig. 2 zeigt einen Dokumentenpuffer 200 gemäß einer Ausführungsform. Der Dokumentenpuffer umfasst eine Mehrzahl von Aufnahmefächern 101, welche in der Form einer Matrix-Struktur mit Reihen und Spalten von Aufnahmefächern 101 angeordnet sind.

Die Aufnahmefächer 101 sind durch elektrisch leitfähige Wannen gebildet, mit Abschirmwandungen 105, 107, 201 und 203. Die Aufnahmefächer 101 grenzen aneinander, wobei zwischen den Aufnahmefächern 101 jeweils eine Lücke 205 gebildet sein kann, deren Dicke einer Dicke einer Abschirmwandung 105, 107, 201, 203 entsprechen kann. Auf diese Weise hat jedes Fach eigene Abschirmwandungen 105, 107, 201, 203, welche die elektromagnetischen Wellen, welche von der jeweiligen Schreib-Lese-Einrichtung 113 stammen, zumindest teilweise dämpfen. Dadurch werden benachbarte Aufnahmefächer 101 elektromagnetisch weniger gestört. Da jedes Aufnahmefach 101 eigene Abschirmwandungen 105, 107, 201, 203 aufweist, sind zwischen benachbarten Aufnahmefächern 101 zwei Abschirmwandungen 105, 107, 201, 203 angeordnet, wodurch die Abschirmwirkung noch weiter erhöht wird.

Gemäß einer Ausführungsform grenzen die Aufnahmefächer 101 jedoch unmittelbar aneinander.

Gemäß einer Ausführungsform ist zwischen benachbarten Aufnahmefächern 101 jeweils nur eine Abschirmwandung angeordnet und trennt die Aufnahmefächer 101 voneinander. In diesem Fall teilen sich zwei benachbarte Aufnahmefächer 101 jeweils eine der Abschirmwandungen 105, 107, 201, 203.

### BEZUGSZEICHENLISTE

- 101: Aufnahmefach
- 103: Identifikationsdokument
- 105: Abschirmwandung
- 107: Abschirmwandung
- 109: Bodenbereich
- 111: Dokumentenhalterung
- 113: Schreib-Lese-Einrichtung
- 201: Abschirmwandung
- 203: Abschirmwandung
- 205: Lücke

## Patentansprüche

1. Dokumentenpuffer (200) zum Zugreifen auf drahtlos lesbare Schaltkreise von elektronisch auslesbaren Identifikationsdokumenten, mit
einer Mehrzahl von benachbarten Aufnahmefächern (101), wobei jedes Aufnahmefach (101) für die Aufnahme von einem Identifikationsdokument vorgesehen ist, und wobei zwischen benachbarten Aufnahmefächern (101) eine leitfähige Abschirmwandung (105, 107, 201, 203) zur elektromagnetischen Abschirmung angeordnet ist, wobei die Aufnahmefächer (101) jeweils durch Wannen mit den leitfähigen Abschirmwandungen (105, 107, 201, 203) gebildet sind und wobei die Aufnahmefächer (101) jeweils eine Dokumentenhalterung (111) zum Auflegen eines Identifikationsdokuments (103) umfassen, um ein jeweiliges Identifikationsdokument (103) in einem jeweiligen Aufnahmefach (101) aufzunehmen; und
einer Mehrzahl von drahtlosen Schreib-Lese-Einrichtungen (113) zur drahtlosen Kommunikation mit jeweils einem drahtlos lesbaren Schaltkreis eines Identifikationsdokumentes (103), wobei jeweils eine drahtlose Schreib-Lese-Einrichtung (113) in jeweils einem Aufnahmefach (101) angeordnet ist.

2. Dokumentenpuffer nach Anspruch 1, wobei die drahtlosen Schreib-Lese-Einrichtungen (113) für die Kommunikation mittels elektromagnetischer Wellen eingerichtet sind.

3. Dokumentenpuffer nach Anspruch 1 oder 2, wobei die drahtlosen Schaltkreise der Identifikationsdokumente RFID-Schaltkreise sind, und wobei die drahtlosen Schreib-Lese-Einrichtungen (113) RFID- Schreib-Lese-Einrichtungen zur Kommunikation mit den RFID-Schaltkreisen sind.

4. Dokumentenpuffer nach einem der vorstehenden Ansprüche, wobei die Aufnahmefächer (101) in Form einer Matrix-Struktur angeordnet sind.

5. Dokumentenpuffer nach einem der vorstehenden Ansprüche, wobei benachbarte Aufnahmefächer (101) durch eine gemeinsame leitfähige Abschirmwandung (105, 107, 201, 203) getrennt sind.

6. Dokumentenpuffer nach einem der vorstehenden Ansprüche, wobei die leitfähigen Abschirmwandungen (105, 107, 201, 203) aus Metall oder aus einem leitfähigen Kunststoff, insbesondere aus einem leitfähigen Polymer, oder aus Ferritmaterialien oder aus Ferritfolien geformt sind.

7. Dokumentenpuffer nach Anspruch 1, wobei jeweils unter einer Dokumentenhalterung (111) eine drahtlose Schreib-Lese-Einrichtung (113) angeordnet ist.

8. Dokumentenpuffer (200) nach einem der vorstehenden Ansprüche, wobei
der Dokumentenpuffer (200) eine gemeinsame Kommunikationsschnittstelle zur Kommunikation mit der Mehrzahl von drahtlosen Schreib-Lese-Einrichtungen (113) umfasst, wobei jeder drahtlosen Schreib-Lese-Einrichtung (113) eine Netzwerkkommunikationsadresse zugeordnet ist, oder wobei
der Dokumentenpuffer (200) eine Mehrzahl von Kommunikationsschnittstellen zur Kommunikation mit der Mehrzahl von drahtlosen Schreib-Lese-Einrichtungen (113) umfasst, wobei jeder drahtlosen Schreib-Lese-Einrichtung (113) eine Kommunikationsschnittstelle zugeordnet ist.

9. Dokumentenpuffer nach Anspruch 8, wobei die jeweilige Kommunikationsschnittstelle eine der folgenden Kommunikationsschnittstellen ist: USB, SATA, RS232, RS 485, I²C, Profibus, AS, ASi, Interbus, FlexRay, LIN-Bus, FAIS, IrDa, MODBUS, CAN, Feldbus, Thunderbolt.

10. Dokumentenpuffer nach einem der vorstehenden Ansprüche, wobei die Mehrzahl von drahtlosen Schreib-Lese-Einrichtungen (113) gleichzeitig adressierbar ist oder wobei die Mehrzahl von drahtlosen Schreib-Lese-Einrichtungen (113) ausgebildet ist, gleichzeitig auf die drahtlos lesbaren Schaltkreise zuzugreifen.

11. Dokumentenpuffer nach einem der vorstehenden Ansprüche, wobei benachbarte Aufnahmefächer (101) unmittelbar aneinander grenzen.

12. Dokumentenpuffer nach einem der vorstehenden Ansprüche, wobei die Schreib-Lese-Einrichtungen (113) elektronische Schreib-Lesegeräte oder optische Lesegeräte, insbesondere optische Lesegeräte zur Bildaufnahme oder eine Sensorik im sichtbaren Lichtbereich, im UV-Lichtbereich oder im Infrarot-Lichtbereich, oder eine mechanische oder induktive oder elektronische Sensorik im Bereich physikalischer Messtechnik sind, oder wobei der Dokumentenpuffer zumindest eine Zugriffseinrichtung zum Zugreifen auf zumindest ein Identifikationsdokument aufweist, wobei die Zugriffseinrichtung ein elektronisches Schreib-Lesegerät oder ein optisches Lesegerät, insbesondere ein optisches Lesegerät zur Bildaufnahme oder eine Sensorik im sichtbaren Lichtbereich, im UV-Lichtbereich oder im Infrarot-Lichtbereich, oder eine mechanische oder induktive oder elektronische Sensorik im Bereich physikalischer Messtechnik ist.

## Claims

1. A document buffer (200) for accessing wirelessly readable circuits of electronically readable identification documents, comprising
a plurality of adjacent receiving compartments (101), wherein each receiving compartment (101) is provided for receiving an identification document, and wherein a conductive shielding wall (105, 107, 201, 203) for electromagnetic shielding is situated between adjacent receiving compartments (101), wherein the receiving compartments (101) are in each case formed by troughs with the conductive shielding walls (105, 107, 201, 203), and wherein the receiving compartments (101) each include a document holder (111) for placing an identification document (103) in order to receive a particular identification document (103) in a particular receiving compartment (101); and
a plurality of wireless write-read units (113) for wirelessly communicating in each case with a wirelessly readable circuit of an identification document (103), wherein a wireless write-read unit (113) is arranged in each receiving compartment (101).

2. The document buffer according to Claim 1, wherein the wireless write-read units (113) are configured for communication via electromagnetic waves.

3. The document buffer according to Claim 1 or 2, wherein the wireless circuits of the identification documents are RFID circuits, and wherein the wireless write-read units (113) are RFID write-read units for communicating with the RFID circuits.

4. The document buffer according to one of the preceding claims, wherein the receiving compartments (101) are arranged in the form of a matrix structure.

5. The document buffer according to one of the preceding claims, wherein adjacent receiving compartments (101) are separated by a shared conductive shielding wall (105, 107, 201, 203).

6. The document buffer according to one of the preceding claims, wherein the conductive shielding walls (105, 107, 201, 203) are formed from metal or a conductive plastic, in particular a conductive polymer, or ferrite materials or ferrite foils.

7. The document buffer according to Claim 1, wherein a wireless write-read unit (113) is situated in each case beneath a document holder (111).

8. The document buffer (200) according to one of the preceding claims, wherein
the document buffer (200) includes a shared communication interface for communicating with the plurality of wireless write-read units (113), wherein a network communication address is associated with each wireless write-read unit (113), or wherein
the document buffer (200) includes a plurality of communication interfaces for communicating with the plurality of wireless write-read units (113), wherein a communication interface is associated with each wireless write-read unit (113).

9. The document buffer according to Claim 8, wherein the particular communication interface is one of the following communication interfaces: USB, SATA, RS232, RS 485, I²C, Profibus, AS, ASi, Interbus, FlexRay, LIN bus, FAIS, IrDa, Modbus, CAN, Fieldbus, Thunderbolt.

10. The document buffer according to one of the preceding claims, wherein the plurality of wireless write-read units (113) are simultaneously addressable, or wherein the plurality of wireless write-read units (113) are configured to simultaneously access the wirelessly readable circuits.

11. The document buffer according to one of the preceding claims, wherein adjacent receiving compartments (101) directly adjoin one another.

12. The document buffer according to one of the preceding claims, wherein the write-read units (113) are electronic write-read devices or optical reading devices, in particular optical reading devices for image acquisition or a sensor system in the visible light range, in the UV light range, or in the infrared light range, or a mechanical or inductive or electronic sensor system in the field of physical measuring technology, or wherein the document buffer has at least one access unit for accessing at least one identification document, wherein the access unit is an electronic write-read device or an optical reading device, in particular an optical reading device for image acquisition or a sensor system in the visible light range, in the UV light range, or in the infrared light range, or a mechanical or inductive or electronic sensor system in the field of physical measuring technology.

## Revendications

1. Tampon de documents (200) pour accéder à des circuits à lecture sans fil de documents d'identification à lecture électronique, comprenant
une pluralité de casiers de réception adjacents (101), dans lequel chaque casier de réception (101) est prévu pour recevoir un document d'identification, et dans lequel une paroi de blindage conductrice (105, 107, 201, 203) pour le blindage électromagnétique est disposée entre des casiers de réception adjacents (101), dans lequel les casiers de réception (101) sont respectivement formés par des bacs avec les parois de blindage conductrices (105, 107, 201, 203), et dans lequel les casiers de réception (101) comprennent respectivement un support de document (111) pour y poser un document d'identification (103) afin de recevoir un document d'identification (103) respectif dans un casier de réception (101) respectif ; et
une pluralité de dispositifs d'écriture et de lecture sans fil (113) pour la communication sans fil avec respectivement un circuit à lecture sans fil d'un document d'identification (103), respectivement un dispositif d'écriture et de lecture dans fil (113) étant disposé dans respectivement un casier de réception (101).

2. Tampon de documents selon la revendication 1, dans lequel les dispositifs d'écriture et de lecture sans fil (113) sont agencés pour la communication au moyen d'ondes électromagnétiques.

3. Tampon de documents selon la revendication 1 ou 2, dans lequel les circuits sans fil des documents d'identification sont des circuits RFID, et dans lequel les dispositifs d'écriture et de lecture sans fil (113) sont des dispositifs d'écriture et de lecture RFID pour la communication avec les circuits RFID.

4. Tampon de documents selon l'une quelconque des revendications précédentes, dans lequel les casiers de réception (101) sont disposés sous la forme d'une structure de matrice.

5. Tampon de documents selon l'une quelconque des revendications précédentes, dans lequel des casiers de réception adjacents (101) sont séparés par une paroi de blindage conductrice (105, 107, 201, 203) commune.

6. Tampon de documents selon l'une quelconque des revendications précédentes, dans lequel les parois de blindage conductrices (105, 107, 201, 203) sont formées à partir d'un métal ou d'une matière plastique conductrice, en particulier à partir d'un polymère conducteur, ou à partir de matériaux de ferrite ou de films de ferrite.

7. Tampon de documents selon la revendication 1, dans lequel un dispositif d'écriture et de lecture sans fil (113) est disposé respectivement sous un support de document (111).

8. Tampon de documents (200) selon l'une quelconque des revendications précédentes, dans lequel
le tampon de documents (200) comprend une interface de communication commune pour communiquer avec la pluralité de dispositifs d'écriture et de lecture sans fil (113), une adresse de communication de réseau étant attribuée à chaque dispositif d'écriture et de lecture sans fil (113), ou dans lequel
le tampon de documents (200) comprend une pluralité d'interfaces de communication pour communiquer avec la pluralité de dispositifs d'écriture et de lecture sans fil (113), une interface de communication étant attribuée à chaque dispositif d'écriture et de lecture sans fil (113).

9. Tampon de documents selon la revendication 8, dans lequel l'interface de communication respective est l'une des interfaces de communication suivantes : USB, SATA, RS232, RS485, I²C, Profibus, AS, ASi, Interbus, FlexRay, bus LIN, FAIS, IrDa, MODBUS, CAN, bus de terrain, Thunderbolt.

10. Tampon de documents selon l'une quelconque des revendications précédentes, dans lequel la pluralité de dispositifs d'écriture et de lecture sans fil (113) peut être adressée simultanément, ou dans lequel la pluralité de dispositifs d'écriture et de lecture sans fil (113) est réalisée pour accéder simultanément aux circuits à lecture sans fil.

11. Tampon de documents selon l'une quelconque des revendications précédentes, dans lequel des casiers de réception adjacents (101) sont directement contigus.

12. Tampon de documents selon l'une quelconque des revendications précédentes, dans lequel les dispositifs d'écriture et de lecture sans fil (113) sont des appareils d'écriture et de lecture électroniques ou des appareils de lecture optique, en particulier des appareils de lecture optique pour la prise d'image ou un système capteur dans le domaine de la lumière visible, dans le domaine de la lumière UV ou dans le domaine de la lumière infrarouge, ou un système capteur mécanique ou inductif ou électronique dans le domaine de la métrologique physique, ou dans lequel le tampon de documents présente au moins un dispositif d'accès pour accéder à au moins un document d'identification, dans lequel le dispositif d'accès est un appareil d'écriture et de lecture électronique ou un appareil de lecture optique, en particulier un appareil de lecture optique pour la prise d'image ou un système capteur dans le domaine de la lumière visible, dans le domaine de la lumière UV ou dans le domaine de la lumière infrarouge, ou un système capteur mécanique ou inductif ou électronique dans le domaine de la métrologique physique.
